# EUROPÄISCHE PATENTSCHRIFT

(11) **EP 3 331 201 B1**
(45) Veröffentlichungstag und Bekanntmachung des Hinweises auf die Patenterteilung: **07.08.2019**
(21) Anmeldenummer: 17001815.4
(22) Anmeldetag: 07.11.2017
(51) Int. Cl.: H04L 12/40

(54) **MODBUS-NETZWERK ZUR REDUNDANTEN FERNANBINDUNG**
MODBUS NETWORK FOR REDUNDANT REMOTE CONNECTION
RÉSEAU MODBUS DESTINÉ À UNE CONNEXION DISTANTE REDONDANTE

(30) Priorität: 03.12.2016 DE 202016007423 U
(43) Veröffentlichungstag der Anmeldung: 06.06.2018
(73) Patentinhaber: WAGO Verwaltungsgesellschaft mbH, 32423 Minden (DE)
(72) Erfinder: Südekum, Norman, D - 30982 Pattensen (DE); Sundet, Torgeir, N-1369 Stabekk (NO); Paul, Marc-Andree, D - 32457 Porta Westfalica (DE)
(74) Vertreter: Müller, Wolf-Christian

(56) Entgegenhaltungen:
- WO-A1-2007/147974
- WO-A1-2015/166332
- CN-A- 104 597 827
- CN-A- 105 897 574
- US-A1- 2004 153 594
- US-A1- 2008 123 522
- US-A1- 2011 161 538
- US-A1- 2013 211 552
- US-A1- 2013 262 723
- US-A1- 2014 233 372

## Beschreibung

### GEBIET

Die vorliegende Erfindung bezieht sich auf Modbus-Netzwerke. Insbesondere bezieht sich die vorliegende Erfindung auf Modbus-Netzwerke zur redundanten Fernanbindung von Eingabe/Ausgabe (E/A) Modulen an ein zentrales Steuergerät.

### HINTERGRUND

Modbus-Netzwerke zur Fernanbindung sind aus dem Stand der Technik bekannt. Bspw. sind Modbus-Netzwerke bekannt, bei denen ein logischer Master (d. h. ein steuerndes Gerät wie bspw. ein Steuergerät) Zustandsdaten von logischen Slaves (d. h. gesteuerte Geräte wie bspw. E/A-Module mit angeschlossenen Sensoren, Aktoren, etc.) abruft und auf Basis der abgerufenen Zustandsdaten Steuerbefehle ermittelt, die an einen oder mehrere der logischen Slaves (bspw. die Aktoren) übermittelt werden.

Zudem ist es bekannt, zur Erhöhung der Sicherheit und Verfügbarkeit Geräte redundant zu verbinden, d. h. über mehrere getrennte Signalpfade, so dass bei einem Ausfall eines Signalpfades trotzdem eine unterbrechungsfreie Kommunikation der verbundenen Geräte möglich ist.

Aus der CN 105 897 574 A ist ein Modbus RTU/TCP-Gateway-Gerät bekannt, das Doppel-Ethernet- und Doppel-Master-Station-Redundanz unterstützt. Das Modbus RTU/TCP-Gateway-Gerät umfasst eine Prozessoreinheit, eine Busschnittstelleneinheit, eine erste Ethernet-Port-Einheit und eine zweite Ethernet-Port-Einheit. Die Prozessoreinheit ist jeweils mit der ersten Ethernet-Port-Einheit und der zweiten Ethernet-Port-Einheit über eine unabhängige Signalleitung verbunden. Zudem ist die Prozessoreinheit über eine Signalleitung mit der Busschnittstelleneinheit verbunden.

Aus der CN 104597 827 A ist ein elektrisches Steuerausführungssystem mit einer Hauptsteuerungs-Mikrosteuereinheit, einer mit der Hauptsteuerungs-Mikrosteuereinheit verbundenen Antriebsschaltung, einer Signalverarbeitungsschaltung und einer elektrischen Drehmomenterfassungsschaltung bekannt. Das intelligente elektrische Steuerausführungssystem weist ferner eine Hilfssteuermikrosteuereinheit auf, die mit einer Mensch-Maschine-Anzeigeschnittstelle, einem Positionssender, einer Modbus-Schleifenredundanz-Kommunikationskarte, einem Leistungsmodul und einer Verarbeitungsschaltung mit geringer Verlustleistung verbunden ist. Die Hauptsteuer-Mikrosteuereinheit ist über eine RS-232 mit der Hilfssteuermikrosteuereinheit verbunden.

Aus der US 2011/161538 A1 ist ein Verfahren und ein System zum Implementieren redundanter Master-Netzwerkschnittstellenmodule auf einem einzelnen Bus in einem industriellen verteilten E/A-System zum Steuern ausgewählter E/A-Module gezeigt. Dabei arbeiten zwei Master-Netzwerkschnittstellenmodule auf einem einzigen Bus zusammen, wobei einer der primäre, aktive Master ist und der zweite Master in einem sekundären, Standby-Modus bereitsteht, die Kontrolle über das System zu übernehmen, wenn der primäre Master nicht mehr aktiv ist.

Aus der US 2013/211552 A1 ist ein Verfahren zum Wählen des aktiven Hauptgeräts aus zwei redundanten primären und sekundären Master-Geräten bekannt, wobei die primären und sekundären Master-Geräte direkt mit einem Feldbus verbunden sind und durch ein Anschlusskabel miteinander verbunden sind und jeweils einen aktiven Betriebsmodus und einen Standby-Modus aufweisen. Die primären und sekundären Master-Geräte weisen ein und dieselbe Zustandsmaschine auf, die Mittel zum Bestimmen eines der primären und sekundären Master-Geräts als das aktive Master-Gerät umfasst. Das Anschlusskabel umfasst intrinsische Mittel zum Herstellen einer gerichteten Beziehung des primären Master-Geräts zum sekundären Master-Gerät.

Aus der US 2008/123522 A1 ist ein Verfahren zum Bereitstellen eines Hot-Standby-Masters. Das Verfahren umfasst das kommunikative Koppeln eines Redundanzkopplers an einen Feldbus mit mindestens einer damit kommunikativ gekoppelten Slave-Vorrichtung. Das Verfahren umfasst ferner das kommunikative Koppeln einer Mehrzahl von redundanten Feldbus-Master-Controllern (MCs) mit dem Koppler und das Verwenden des Kopplers, um zu bestimmen, welcher der mehreren redundanten MCs aktiv ist. In dem Verfahren ist auch enthalten, den Koppler zu verwenden, um Daten von dem aktiven MC zu empfangen und die empfangenen Daten von dem aktiven MC zu dem einen oder den mehreren Slave-Geräten über den Feldbus weiterzuleiten. Zusätzlich wird der Koppler verwendet, um Daten von den anderen redundanten MCs zu empfangen und um zu verhindern, dass die empfangenen Daten von den redundanten MCs zu der einen oder den mehreren Slave-Vorrichtungen weitergeleitet werden.

Aus der WO 2007/147974 A1 ist ein Kommunikationsgerät eines Telekommunikationsnetzes bekannt, das über eine serielle Verbindung mit einem ersten Slave-Modul und über eine Ethernet-Verbindung mit mindestens einem zweiten Kommunikationsgerät und einem Master-Modul verbunden werden kann, wobei das Kommunikationsgerät Seriell-Ethernet-Umwandlungsmittel aufweist. Das Kommunikationsgerät weist einen Speicher auf, der Daten speichern kann, die von dem ersten Slave-Modul und/oder von dem mindestens einen zweiten Kommunikationsgerät gesendet werden, wobei die übertragenen Daten unabhängig von dem Master-Modul ausgetauscht werden.

Aus der US 2013/262723 A1 ist eine Busteilnehmer-Einrichtung zum Anschluss an einen linienredundanten, seriellen Datenbus, über den Daten nach einem vorgegebenen Protokoll ausgetauscht werden, bekannt. Die Einrichtung umfasst eine Datensendeeinheit, wenigstens zwei Datenempfangseinheiten, die parallel geschaltet sind, eine Linienauswahl-Logik, und wenigstens zwei Buskommunikations-Schnittstellen zur Verbindung mit einer entsprechenden Anzahl von Linien des Datenbusses, wobei jede der Datenempfangseinheiten über eine zugeordnete Buskommunikations-Schnittstelle mit einer zugeordneten Linie des Datenbusses verbindbar ist und Mittel zum Empfangen eines Datenblocks von der zugeordneten Linie des Datenbusses und Mittel zum Weiterleiten des empfangenen Datenblocks an die Linieauswahl-Logik. Die Linienauswahl-Logik weist Mittel zum Auswählen einer Linie des Datenbusses als Empfangslinie und Weiterleiten des über die ausgewählte Empfangslinie empfangenen Datenblocks auf, wobei jeder der wenigstens zwei Datenempfangseinheiten wenigstens eine eigene Timereinrichtung zugeordnet ist.

Aus der WO 2015/166332 A1 ist ein Verfahren zum Verbinden mehrerer erster Slave-Einheiten in einem System mit verteilter Steuerung, ein System mit verteilter Steuerung und eine Master-Steuereinheit bekannt. Das System weist eine Master-Steuereinheit und mehrere erste Slave-Einheiten auf. Das System weist ferner eine zweite Slave-Einheit auf, die einen ersten Kommunikationsanschluss, einen zweiten Kommunikationsanschluss und einen dritten Kommunikationsanschluss auf, wobei jeder Kommunikationsanschluss einen Eingang und einen Ausgang aufweist. In der zweiten Slave-Einheit ist der Eingang des ersten Kommunikationsanschlusses intern kommunikativ mit dem Ausgang des zweiten Kommunikationsanschlusses verbunden, der Eingang des zweiten Kommunikationsanschlusses ist intern kommunikativ mit dem Ausgang des dritten Kommunikationsanschlusses verbunden, und der Eingang des dritten Kommunikationsanschlusses ist intern kommunikativ mit dem Ausgang des ersten Kommunikationsanschlusses verbunden. Das Verfahren umfasst ferner das Bilden einer Kette von ersten Slave-Einheiten ausgehend von den mehreren ersten Slave-Einheiten, das kommunikative Verbinden der Master-Steuereinheit mit dem ersten Kommunikationsanschluss der zweiten Slave-Einheit, das kommunikative Verbinden eines ersten Kommunikationsanschlusses einer vorderen Slave-Einheit aus der Kette von ersten Slave-Einheiten mit dem zweiten Kommunikationsanschluss der zweiten Slave-Einheit und das kommunikative Verbinden eines zweiten Kommunikationsanschlusses einer hinteren Slave-Einheit aus der Kette mit dem dritten Kommunikationsanschluss der zweiten Slave-Einheit.

Aus der US 2014/233372 A1 ist ein verteiltes Echtzeit-Netzwerkmodul bekannt, das eine Schnittstelle zwischen mindestens einer Master-Anwendung und mindestens einem verteilten Echtzeitnetzwerk bereitstellt. Das verteilte Echtzeit-Netzwerkmodul umfasst eine erste Kommunikationskomponente, die zum Senden und Empfangen von verteilten Echtzeit-Netzwerkdateri über mindestens eine erste verteilte Echtzeit-Netzwerkverbindung eingerichtet ist, mindestens eine weitere Kommunikationskomponente zum Senden und Empfangen von Netzwerkdaten über mindestens eine weitere verteilte Echtzeitnetzwerkverbindung, mindestens eine Master-Anwendungsschnittstellenkomponente, die eingerichtet ist, eine Schnittstelle zu der mindestens einen Master-Anwendung bereitzustellen, und mindestens eine Konfigurationskomponente, die eingerichtet ist, Kommunikationskanäle zwischen der ersten Kommunikationskomponente, der mindestens einen weiteren Kommunikationskomponente und der mindestens einen Master-Anwendungsschnittstellenkomponente abzubilden. Die mindestens eine Konfigurationskomponente ist ferner eingerichtet, bei Erfassen eines Verbindungsfehlers in Echtzeit eine dynamische Neuabbildung der Kommunikationskanäle zwischen der ersten Kommunikationskomponente, der mindestens einen weiteren Kommunikationskomponente und der mindestens einen Master-Anwendungsschnittstelle durchzuführen.

Aus der US 2004/153594 A1 ist Schnittstellenmodul zur Verwendung in einem Prozesssteuerungssystem bekannt, das ein Fieldbus-Prozesssteuerungsnetz mit einer Vielzahl von Fieldbus-Feldgeräten sowie ein Modbus-Prozesssteuerungsnetz mit einer Vielzahl von Modbus-Feldgeräten umfasst. Das Schnittstellenmodul verbindet das Fieldbus-Prozesssteuerungsnetz funktionsmäßig mit dem Modbus-Prozesssteuerungsnetz und ist dazu ausgelegt, den Austausch von Prozesssteuerungsinformation zwischen dem Fieldbus-Prozesssteuerungsnetz und dem Modbus-Prozesssteuerungsnetz zu ermöglichen. Das Schnittstellenmodul umfasst ein Fieldbus-Ein-/Ausgabemodul, das funktionsmäßig mit dem Fieldbus-Prozesssteuerungsnetz gekoppelt und dazu ausgelegt ist, Fieldbus-Protokollnachrichten an das Fieldbus-Prozesssteuerungsnetz zu senden bzw. von diesem zu empfangen. Das Schnittstellenmodul umfasst ferner ein Modbus-Ein-/Ausgabemodul, das funktionsmäßig mit dem Modbus-Prozesssteuerungsnetzgekoppelt und dazu ausgelegt ist, Modbus-Protokollnachrichten an das Modbus-Prozesssteuerungsnetz zu senden bzw. von diesem zu empfangen. Das Schnittstellenmodul umfasst zudem eine Steuereinheit, die funktionsmäßig mit dem Fieldbus-Ein-/Ausgabemodul und dem Modbus-Ein-/Ausgabemodul gekoppelt ist, wobei die Steuereinheit einen Prozessor umfasst und einen Speicher, der funktionsmäßig mit dem Prozessor gekoppelt ist. Die Steuereinheit ist so programmiert, dass sie im Speicher eine Registerspeicherabbild-Datenbankablegt, in der zumindest ein Fieldbus-Prozesssteuerungsparameter des Fieldbus-Prozesssteuerungsnetzes einer Modbus-Registerzahl des Modbus-Prozesssteuerungsnetzes zugeordnet ist, wobei die Steuereinheit so programmiert ist, dass sie das Fieldbus-Ein-/Ausgabemoduldazu veranlasst, einen aktuellen Wert des zumindest einen Fieldbus-Prozesssteuerungsparameters von einem entsprechenden Fieldbus-Feldgerät abzurufen, wobei die Steuereinheit so programmiert ist, dass sie den aktuellen Wert des zumindest einen Fieldbus-Prozesssteuerungsparameters in der Registerspeicherabbild-Datenbankmit der zugeordneten Modbus-Registerzahl ablegt. Ferner ist die Steuereinheit so programmiert, dass sie das Modbus-Ein-/Ausgabemoduldazu veranlasst, an eines der Modbus-Feldgeräte eine Antwortnachricht mit dem aktuellen Wert des zumindest einen Fieldbus-Prozesssteuerungsparameters und der zugeordneten Modbus-Registerzahl zu senden, und zwar als Reaktion auf den Empfang einer Abrufnachricht von diesem einen Modbus-Feldgerät am Modbus-Ein-/Ausgabemodul bezüglich des aktuellen Werts der zugeordneten Modbus-Registerzahl.

### ZUSAMMENFASSUNG

Es ist die Aufgabe der vorliegenden Erfindung, die aus dem Stand der Technik bekannten Konzepte zur redundanten Fernanbindung zu verbessern.

Diese Aufgabe wird gelöst durch das Trennen der logischen und signaltechnischen Einteilung von Modbus-Netzwerkteilnehmern in Master und Slaves und insbesondere durch das Ausbilden bzw. Betreiben von logischen Slaves als Modbus-Master und das Ausbilden bzw. Betreiben eines logischen Masters als Modbus-Slave. Als "logischer Master" wird in diesem Zusammenhang insbesondere ein Modbus-Netzwerkteilnehmer verstanden, der aus empfangenen Zustandsdaten Steuerbefehle ableitet, mit denen die Aktorik der durch den "logischen Master" gesteuerten Geräte gesteuert wird.

Als "Modbus-Master" wird ferner insbesondere ein Modbus-Netzwerkteilnehmer verstanden, welcher Kommunikationsbefehle an Modbus-Netzwerkteilnehmer sendet, bspw. eine Lese- oder Schreibaufforderung, denen der empfangende Modbus-Netzwerkteilnehmer in seiner Eigenschaft als "Modbus-Slave" Folge leistet. Der "Modbus-Master" steuert somit insbesondere den Ablauf der Kommunikation mit Modbus-Netzwerkteilnehmern, während der "logische Master" bspw. mittels des (Nutz-)Inhalts der Kommunikation die Aktorik der zu steuernden Geräte steuert.

Ein erfindungsgemäßes Modbus-Netzwerk umfasst einen ersten Netzwerkteilnehmer, der eine erste Steuerschaltung aufweist, wobei die erste Steuerschaltung dazu eingerichtet ist, erste Eingangsdaten zusammen mit einer Schreibaufforderung über einen ersten Port des ersten Netzwerkteilnehmers an einen dritten Netzwerkeilnehmer zu senden und erste Ausgangsdaten mittels einer Leseaufforderung von dem dritten Netzwerkeilnehmer abzufragen, einen zweiten Netzwerkteilnehmer, der eine zweite Steuerschaltung aufweist, wobei die zweite Steuerschaltung dazu eingerichtet ist, zweite Eingangsdaten zusammen mit einer Schreibaufforderung über einen zweiten Port des zweiten Netzwerkteilnehmers an den dritten Netzwerkeilnehmer zu senden und zweite Ausgangsdaten mittels einer Leseaufforderung von dem dritten Netzwerkeilnehmer abzufragen und den dritten Netzwerkteilnehmer, der eine dritte Steuerschaltung aufweist, wobei die dritte Steuerschaltung dazu eingerichtet ist, auf Basis der ersten und zweiten Eingangsdaten unter Verwendung eines in der dritten Steuerschaltung implementierten Steueralgorithmus die ersten und zweiten Ausgangsdaten zu bestimmen, wobei der dritte Netzwerkteilnehmer als logischer Master und Modbus-Slave ausgebildet ist, der erste Netzwerkteilnehmer als Modbus-Master und logischer Slave ausgebildet ist und der zweite Netzwerkteilnehmer als Modbus-Master und logischer Slave ausgebildet ist.

Unter dem Begriff "Steuerschaltung" wie er in den Ansprüchen und der Beschreibung verwendet wird, ist insbesondere eine Logikschaltung oder ein Prozessor zu verstehen, welcher dazu eingerichtet ist, aus digitalen Eingangsdaten, d. h. einem Satz an Eingangsbits, digitale Ausgangsdaten, d. h. einen Satz an Ausgangsbits, zu bestimmen, wobei die digitalen Ausgangsdaten bspw. zur Steuerung der Aktorik eines oder mehrerer Geräte vorgesehen sind.

Ferner ist unter dem Begriff "Schreibaufforderung", wie er in den Ansprüchen und der Beschreibung verwendet wird, insbesondere ein Befehl zu verstehen, der den Empfänger dazu auffordert, die Eingangsdaten in einen bestimmten Speicher bzw. Speicherbereich des Empfängers abzuspeichern. Des Weiteren ist unter dem Begriff "Leseaufforderung" wie er in den Ansprüchen und der Beschreibung verwendet wird, insbesondere ein Befehl zu verstehen, der den Empfänger dazu auffordert, die Ausgangsdaten in einem bestimmten Speicher bzw. Speicherbereich des Befehls-Empfängers zu übermitteln.

Zudem ist unter dem Begriff "Steueralgorithmus", wie er in den Ansprüchen und der Beschreibung verwendet wird, insbesondere eine Reihe an logikbasierten Anweisungen zu verstehen, deren Ausführung bspw. aus Zustandsdaten (Messdaten, etc.) Steuerdaten (Aktorikbefehle, etc.) bestimmt.

Vorzugsweise ist die erste Steuerschaltung dazu eingerichtet, eine Kopie der ersten Eingangsdaten zusammen mit einer Schreibaufforderung über einen dritten Port des ersten Netzwerkteilnehmers an den dritten Netzwerkeilnehmer zu senden und die zweite Steuerschaltung dazu eingerichtet, eine Kopie der zweiten Eingangsdaten zusammen mit einer Schreibaufforderung über einen vierten Port des zweiten Netzwerkteilnehmers an den dritten Netzwerkeilnehmer zu senden.

Unter dem Begriff "Kopie" wie er in den Ansprüchen und der Beschreibung verwendet wird, ist insbesondere ein Replikat digitaler Daten zu verstehen, wobei es unerheblich sein soll, ob die entsprechende Steuerschaltung zwei identische Sätze an Eingangsdaten-Bits physikalisch getrennt speichert und überträgt, oder ob die entsprechende Steuerschaltung einen physikalisch gespeicherten Satz an Eingangsdaten-Bits (gleichzeitig oder zeitlich versetzt) an zwei Empfänger überträgt.

Des Weiteren ist unter dem Begriff "Port" wie er in den Ansprüchen und der Beschreibung verwendet wird, insbesondere eine Schnittstelle zu verstehen, die zur Ausgabe digitaler Signale eingerichtet ist. Ferner sind Ports in diesem Zusammenhang insbesondere als physikalische Schnittstellen zu verstehen, wobei unterschiedliche Ports unterschiedliche physikalische Schnittstellen und damit unterschiedliche elektrische (d. h. elektrisch getrennte) Anschlüsse ausbilden.

Vorzugsweise ist die dritte Steuerschaltung dazu eingerichtet, die ersten Ausgangsdaten auf Basis der ersten Eingangsdaten zu bestimmen, wenn die ersten Eingangsdaten zuletzt empfangen wurden oder die ersten Ausgangsdaten auf Basis der Kopie der ersten Eingangsdaten zu bestimmen, wenn die Kopie der ersten Eingangsdaten zuletzt empfangen wurden.

Somit kann der zuletzt empfangene valide Datensatz verwendet werden.

Vorzugsweise ist die dritte Steuerschaltung dazu eingerichtet, den Steueralgorithmus zyklisch auszuführen.

Vorzugsweise umfasst das Modbus-Netzwerk ferner einen vierten Netzwerkteilnehmer, wobei die erste Steuerschaltung ferner dazu eingerichtet ist, die ersten Eingangsdaten zusammen mit einer Schreibaufforderung über den ersten Port des ersten Netzwerkteilnehmers an den vierten Netzwerkeilnehmer zu senden, die zweite Steuerschaltung ferner dazu eingerichtet ist, die zweiten Eingangsdaten zusammen mit einer Schreibaufforderung über den zweiten Port des zweiten Netzwerkteilnehmers an den vierten Netzwerkeilnehmer zu senden und der vierte Netzwerkteilnehmer eine vierte Steuerschaltung aufweist, wobei die vierte Steuerschaltung dazu eingerichtet ist, auf Basis der ersten und zweiten Eingangsdaten unter Verwendung eines in der vierten Steuerschaltung implementierten zweiten Steueralgorithmus dritte und vierte Ausgangsdaten zu bestimmen, wobei die dritten Ausgangsdaten zu den ersten Ausgangsdaten identisch sind und die vierten Ausgangsdaten zu den zweiten Ausgangsdaten identisch sind.

Vorzugsweise sind der Steueralgorithmus und der zweite Steueralgorithmus identisch.

Vorzugsweise ist die erste Steuerschaltung dazu eingerichtet, eine dritte Kopie der ersten Eingangsdaten zusammen mit einer Schreibaufforderung über den dritten Port des ersten Netzwerkteilnehmers an den vierten Netzwerkeilnehmer zu senden und die zweite Steuerschaltung dazu eingerichtet, eine dritte Kopie der zweiten Eingangsdaten zusammen mit einer Schreibaufforderung über den vierten Port des zweiten Netzwerkteilnehmers an den vierten Netzwerkeilnehmer zu senden.

Vorzugsweise ist die erste Steuerschaltung dazu eingerichtet, die dritten Ausgangsdaten mittels einer Leseaufforderung von dem vierten Netzwerkeilnehmer abzufragen, wobei die zweite Steuerschaltung dazu eingerichtet ist, die vierten Ausgangsdaten mittels einer Leseaufforderung von dem vierten Netzwerkeilnehmer abzufragen.

Vorzugsweise ist die erste Steuerschaltung dazu eingerichtet, entweder die von dem dritten Netzwerkteilnehmer abgefragten ersten Ausgangsdaten oder die von dem vierten Netzwerkteilnehmer abgefragten dritten Ausgangsdaten weiterzuleiten.

Vorzugsweise weist der erste Netzwerkteilnehmer einen an einem ersten Gehäuse des ersten Netzwerkteilnehmers angeordneten ersten Schalter auf und die erste Steuerschaltung ist ferner dazu eingerichtet, eine in der Schreibaufforderung enthaltene Angabe hinsichtlich Registern des dritten Netzwerkteilnehmers, in die die ersten Eingangsdaten zu schreiben sind, auf Basis einer Stellung des ersten Schalters zu bestimmen, und der zweite Netzwerkteilnehmer einen an einem zweiten Gehäuse des zweiten Netzwerkteilnehmers angeordneten zweiten Schalter auf und die zweite Steuerschaltung ist ferner dazu eingerichtet, eine in der Schreibaufforderung enthaltene Angabe hinsichtlich Registern des dritten Netzwerkteilnehmers, in die die zweiten Eingangsdaten zu schreiben sind, auf Basis einer Stellung des zweiten Schalters zu bestimmen.

### KURZBESCHREIBUNG DER ZEICHNUNGEN

Die Erfindung wird nachfolgend in der detaillierten Beschreibung anhand von Ausführungsbeispielen erläutert, wobei auf Zeichnungen Bezug genommen wird, in denen:
Fig. 1 eine schematische Darstellung eines Modbus-Netzwerkes; und
Fig. 2 ein schematisches Flussdiagramm eines Kommunikationsprozesses in dem Modbus-Netzwerk;
Fig. 3 eine schematische Darstellung eines Steuergeräts des Modbus-Netzwerkes; und
Fig. 4 eine schematische Darstellung eines E/A-Moduls des Modbus-Netzwerkes zeigt.

Dabei sind in den Zeichnungen gleiche Elemente durch gleiche Bezugszeichen gekennzeichnet.

### DETAILLIERTE BESCHREIBUNG

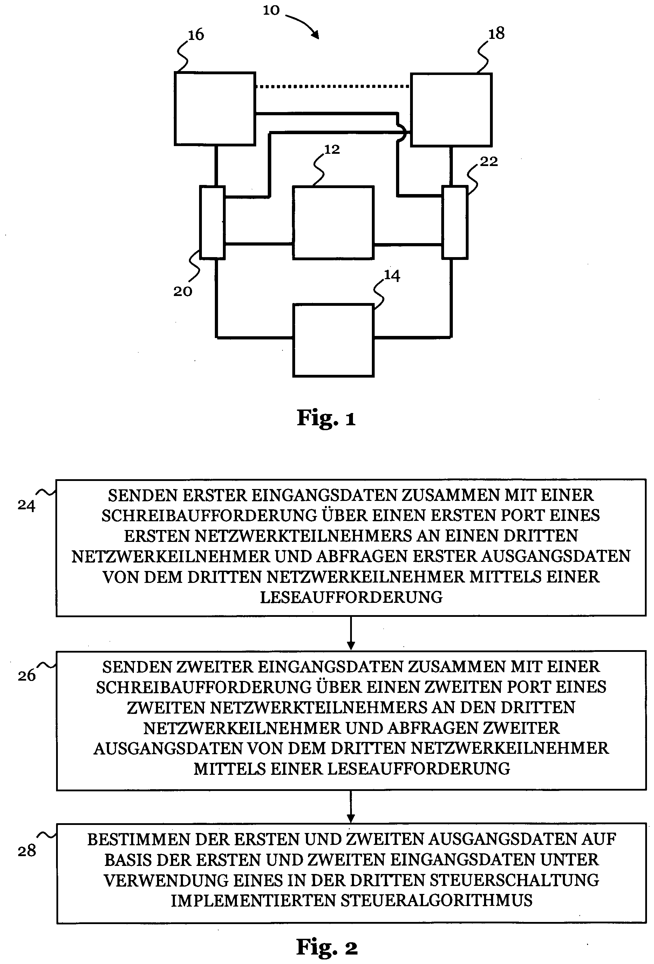

Fig. 1 zeigt ein Modbus-Netzwerk 10 (bspw. Modbus/TCP, Modbus/UDP, etc.). Das Modbus-Netzwerk 10 umfasst eine Reihe an E/A-Modulen, von denen (aus Gründen der besseren Darstellbarkeit nur) zwei in Fig. 1 gezeigt sind und im Folgenden als erster Netzwerkteilnehmer 12 und als zweiter Netzwerkteilnehmer 14 bezeichnet werden. An dem ersten Netzwerkteilnehmer 12 und dem zweiten Netzwerkteilnehmer 14 sind jeweils eine Vielzahl an Sensoren (nicht gezeigt) und Aktoren (nicht gezeigt) angeschlossen. Das Modbus-Netzwerk 10 umfasst ferner ein Steuergerät, welches im Folgenden als dritter Netzwerkteilnehmer 16 bezeichnet wird. Das Modbus-Netzwerk 10 kann ferner ein weiteres (redundantes) Steuergerät umfassen, welches im Folgenden als vierter Netzwerkteilnehmer 18 bezeichnet wird. Beide Steuergeräte können mit einem übergeordneten Rechnersystem verbunden sein, welches die Steuergeräte bei Bedarf (re-)konfiguriert und überwacht. Bspw. können der dritte Netzwerkteilnehmer 16 und der vierte Netzwerkteilnehmer 18 als Speicherprogrammierbare Steuerungen (SPS) ausgebildet sein, die mit einem SCADA ("Supervisory Control and Data Acquisition") System verbunden sind.

Der dritte Netzwerkteilnehmer 16 ist dazu vorgesehen im Betrieb Eingangsdaten von den an dem ersten Netzwerkteilnehmer 12 und dem zweiten Netzwerkteilnehmer 14 angeschlossenen Sensoren (nicht gezeigt) zu empfangen und Steuerbefehle für die an dem ersten Netzwerkteilnehmer 12 und dem zweiten Netzwerkteilnehmer 14 angeschlossenen Aktoren (nicht gezeigt) bereitzustellen. D. h., der dritte Netzwerkteilnehmer 16 steuert die an dem ersten Netzwerkteilnehmer 12 und dem zweiten Netzwerkteilnehmer 14 angeschlossenen Aktoren auf Basis der von dem ersten Netzwerkteilnehmer 12 und dem, zweiten Netzwerkteilnehmer 14 empfangenen Eingangsdaten (bspw. Sensormessdaten).

Der erste Netzwerkteilnehmer 12, der zweite Netzwerkteilnehmer 14, der dritte Netzwerkteilnehmer 16 und der vierte Netzwerkteilnehmer 18 können über separate Leitungen oder, wie in Fig. 1 gezeigt, über programmierbare Netzwerkweichen wie bspw. die gezeigte erste Netzwerkweiche 20 und die gezeigte zweite Netzwerkweiche 22 verbunden sein. Dazu kann bspw. ein Port des ersten Netzwerkteilnehmers 12 mit einem Port der ersten Netzwerkweiche 20 und ein weiterer Port des ersten Netzwerkteilnehmers 12 mit einem Port der zweiten Netzwerkweiche 22 verbunden sein. Ebenso kann ein Port des zweiten Netzwerkteilnehmers 14 mit einem Port der ersten Netzwerkweiche 20 und ein weiterer Port des zweiten Netzwerkteilnehmers 14 mit einem Port der zweiten Netzwerkweiche 22 verbunden sein.

Ferner kann ein Port des dritten Netzwerkteilnehmers 16 mit einem Port der ersten Netzwerkweiche 20 und ein weiterer Port des dritten Netzwerkteilnehmers 16 mit einem Port der zweiten Netzwerkweiche 22 verbunden sein. Des Weiteren kann ein Port des vierten Netzwerkteilnehmers 18 mit einem Port der ersten Netzwerkweiche 20 und ein weiterer Port des vierten Netzwerkteilnehmers 18 mit einem Port der zweiten Netzwerkweiche 22 verbunden sein. Die erste Netzwerkweiche 20 und die zweite Netzwerkweiche 22 können ferner dazu eingerichtet sein an unterschiedliche Adressen adressierte Modbus-Nachrichten an unterschiedlichen Ports auszugeben.

Dies ermöglicht, dass, wie in Schritt 24 und 26 des in Fig. 2 dargestellten Flussdiagramms gezeigt, der erste Netzwerkteilnehmer 12 an den dritten Netzwerkteilnehmer 16 adressierte Eingangsdaten über die erste Netzwerkweiche 20 und redundant dazu über die zweite Netzwerkweiche 22 an den dritten Netzwerkteilnehmer 16 übermitteln kann. Ebenso kann der erste Netzwerkteilnehmer 12 an den vierten Netzwerkteilnehmer 18 adressierte Eingangsdaten über die erste Netzwerkweiche 20 und redundant dazu über die zweite Netzwerkweiche 22 an den vierten Netzwerkteilnehmer 18 übermitteln.

Ferner kann der zweite Netzwerkteilnehmer 14 an den dritten Netzwerkteilnehmer 16 adressierte Eingangsdaten über die erste Netzwerkweiche 20 und redundant dazu über die zweite Netzwerkweiche 22 an den dritten Netzwerkteilnehmer 16 übermitteln. Des Weiteren kann der zweite Netzwerkteilnehmer 14 an den vierten Netzwerkteilnehmer 18 adressierte Eingangsdaten über die, erste Netzwerkweiche 20 und redundant dazu über die zweite Netzwerkweiche 22 an den vierten Netzwerkteilnehmer 18 übermitteln.

Das Senden von Eingangsdaten vom ersten Netzwerkteilnehmer 12 oder vom zweiten Netzwerkteilnehmer 14 zum dritten Netzwerkteilnehmer 16 oder zum vierten Netzwerkteilnehmer 18 kann eine Schreibaufforderung (bspw. den Modbus-Befehl FC6, FC16 oder FC23) umfassen, die den Empfänger dazu auffordert, die Eingangsdaten in einen Eingangsdatenspeicher, bspw. ein Eingangsdatenregister zu schreiben. Eine Adresse des Eingangsdatenspeichers oder eines Speicherbereichs in dem Eingangsdatenspeicher kann von dem ersten Netzwerkteilnehmer 12 und dem zweiten Netzwerkteilnehmer 14 durch Abfragen einer Reihe von am jeweiligen Netzwerkteilnehmer angebrachten Schaltern, bspw. Dip-Schaltern, bestimmt werden.

Der dritte Netzwerkteilnehmer 16 kann, wie in Schritt 28 des in Fig. 2 dargestellten Flussdiagramms gezeigt, die in den Eingangsdatenspeicher, bzw. das Eingangsdatenregister geschriebenen Eingangsdaten zyklisch auslesen und auf Basis eines Steueralgorithmus aus den Eingangsdaten (und ggf. gespeicherter Steuerparameter) Ausgangsdaten bestimmen. Der dritte Netzwerkteilnehmer 16 kann die Ausgangsdaten in einen Ausgangsdatenspeicher, bspw. ein Ausgangsdatenregister schreiben. Eine Adresse des Ausgangsdatenspeichers oder eines Speicherbereichs in dem Ausgangsdatenspeicher kann auf der Adresse des Eingangsdatenspeichers bzw. des Speicherbereichs in dem Eingangsdatenspeicher basieren bzw. aus ihr abgeleitet sein.

Ebenso kann der vierte Netzwerkteilnehmer 18 die in den Eingangsdatenspeicher, bzw. das Eingangsdatenregister geschriebenen Eingangsdaten zyklisch auslesen und auf Basis eines Steueralgorithmus aus den Eingangsdaten (und ggf. gespeicherter Steuerparameter) Ausgangsdaten bestimmen. Der vierte Netzwerkteilnehmer 18 kann die Ausgangsdaten in einen Ausgangsdatenspeicher, bspw. ein Ausgangsdatenregister schreiben. Eine Adresse des Ausgangsdatenspeichers oder eines Speicherbereichs in dem Ausgangsdatenspeicher kann auf der Adresse des Eingangsdatenspeichers bzw. des Speicherbereichs in dem Eingangsdatenspeicher basieren bspw. zu ihr identisch oder aus ihr abgeleitet sein.

Der dritte Netzwerkteilnehmer 16 kann als aktives Steuergerät und der vierte Netzwerkteilnehmer 18 kann als passives Steuergerät fungieren, welches im Falle eines Ausfalls des dritten Netzwerkteilnehmers 16 diesen (zeitlich begrenzt) ersetzt. Bspw. können der dritte Netzwerkteilnehmer 16 und der vierte Netzwerkteilnehmer 18 mittels einer Signalleitung (in Fig. 1 durch eine gestrichelte Linie angedeutet)verbunden sein. Durch die Signalleitung kann der vierte Netzwerkteilnehmer 18 ein periodisches Signal ("Heartbeat-Signal") vom dritten Netzwerkteilnehmer 16 empfangen, wobei das Ausbleiben des Signals dem vierten Netzwerkteilnehmer 18 signalisiert, dass der dritte Netzwerkteilnehmer 16 möglicherweise ausgefallen ist. In diesem Fall kann der vierte Netzwerkteilnehmer 18 die Rolle des aktiven Steuergeräts einnehmen.

Zudem kann der dritte Netzwerkteilnehmer 16, während der dritte Netzwerkteilnehmer 16 die Rolle des aktiven Steuergeräts innehat, den vierten Netzwerkteilnehmer 18, der die Rolle des passiven ("Stand-by") Steuergeräts innehat, zyklisch mit Steuer- und/oder Diagnoseinformationen versorgen. So kann ein Zustand des vierten Netzwerkteilnehmers 18 in jedem oder nach einer bestimmten Anzahl an Zyklen mit einem Zustand des dritten Netzwerkteilnehmers 16 synchronisiert werden.

Zudem können der erste Netzwerkteilnehmer 12 und der zweite Netzwerkteilnehmer 14 in jedem Zyklus oder nach einer bestimmten Anzahl an Zyklen von dem dritten Netzwerkteilnehmer 16 und/oder dem vierten Netzwerkteilnehmer 18 abfragen, ob der dritte Netzwerkteilnehmer 16 oder der vierte Netzwerkteilnehmer 18 die Rolle des aktiven Steuergeräts innehat. Je nachdem, ob der dritte Netzwerkteilnehmer 16 oder der vierte Netzwerkteilnehmer 18 die Rolle des aktiven Steuergeräts innehat, können der erste Netzwerkteilnehmer 12 und der zweite Netzwerkteilnehmer 14 für sie bestimmte Ausgangsdaten aus dem Ausgangsdatenspeicher bzw. dem Speicherbereich in dem Ausgangsdatenspeicher des dritten Netzwerkteilnehmers 16 oder des vierten Netzwerkteilnehmers 18 abfragen (bspw. im Anschluss an das Schreiben der Eingangsdaten mittels des Modbus-Befehls FC6, FC16 oder FC23) abfragen (bspw. mittels des Modbus-Befehls FC3 oder FC23).

Ferner versteht es sich, dass, wie oben angemerkt, das Modbus-Netzwerk 10 zusätzlich zu den gezeigten E/A-Modulen (dem ersten Netzwerkteilnehmer 12 und dem zweiten Netzwerkteilnehmer 14), eine im Prinzip unbegrenzte Anzahl an weiteren (analog eingerichteten) E/A-Modulen umfassen kann, bspw. mehr als 10, mehr als 50, mehr als 100 oder mehr als 200 E/A-Module, die allesamt dazu eingerichtet sein können, in Hinblick auf den dritten Netzwerkteilnehmer 16 und den vierten Netzwerkteilnehmer 18 als Modbus-Master zu agieren. Ebenso kann das Modbus-Netzwerk 10 zusätzlich zu dem gezeigten dritten Netzwerkteilnehmer 16 und den vierten Netzwerkteilnehmer 18 weitere (analog eingerichtete) Steuergeräte umfassen. Zudem können die E/A-Module und Steuergeräte ein VLAN ("Virtual Local Area Network") bilden, das mit einem oder mehreren weiteren VLANs verbunden ist.

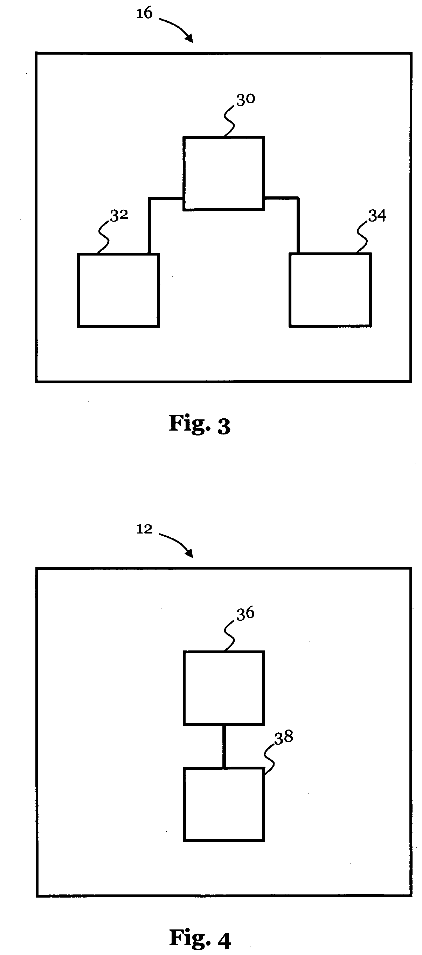

Wie in Fig. 3 gezeigt, kann ein Steuergerät, wie der dritte Netzwerkteilnehmer 16 oder der vierte Netzwerkteilnehmer 18, eine Steuerschaltung 30 und zwei mit der Steuerschaltung verbundene Register; bspw. ein Eingangsregister 32 und ein Ausgangsregister 34 umfassen. Die Steuerschaltung 30 kann dazu eingerichtet sein, in jedem Zyklus Eingangsdaten aus dem Eingangsregister 32 auszulesen und Ausgangsdaten in das Ausgangsregister 34 zu schreiben. Das Eingangsregister 32 kann redundant übermittelte Eingangsdaten des ersten Netzwerkteilnehmers 12 und des zweiten Netzwerkteilnehmers 14 umfassen, die in unterschiedliche Speicherbereiche geschrieben werden können. Von den (redundant) übermittelten Eingangsdaten des ersten Netzwerkteilnehmers 12 und des zweiten Netzwerkteilnehmers 14 kann die Steuerschaltung 30 diejenigen verwenderi, die am aktuellsten sind, d. h. einen jüngeren Zeitstempel aufweisen.

Wie in Fig. 4 gezeigt, kann ein E/A-Modul, wie der erste Netzwerkteilnehmer 12 oder der zweite Netzwerkteilnehmer 14, eine Steuerschaltung 36 und einen an einem Gehäuse des E/A-Moduls angebrachten Schalter 38 (bspw. einen Dip-Schalter) aufweisen. Der Schalter 38 kann manuell betätigbar sein und Speicherbereiche der Steuergeräte festlegen, in die bspw. der erste Netzwerkteilnehmer 12 zyklisch Eingangsdaten schreibt. Dazu kann die Steuerschaltung 36 eine Schalterstellung abfragen und daraus Speicherbereiche ableiten. Ferner kann die Steuerschaltung 36 dazu eingerichtet sein, (Kommunikations- und/oder sonstige Betriebs-) Parameter aus einem nichtflüchtigen Speicher, der in das Gehäuse des ersten Netzwerkteilnehmers 12 einschiebbar ist, auszulesen und nach einer Initialisierungsphase automatisch eine Kommunikation mit dem dritten Netzwerkteilnehmer 16 und dem vierten Netzwerkteilnehmer 18 aufzubauen.

### BEZUGSZEICHENLISTE

- 10: Modbus-Netzwerk
- 12: Netzwerkteilnehmer
- 14: Netzwerkteilnehmer
- 16: Netzwerkteilnehmer
- 18: Netzwerkteilnehmer
- 20: Netzwerkweiche
- 22: Netzwerkweiche
- 24-28: Prozessschritte
- 30: Steuerschaltung
- 32: Eingangsregister
- 34: Ausgangsregister
- 36: Steuerschaltung
- 38: Schalter

## Patentansprüche

1. Modbus-Netzwerk (10), umfassend:
einen ersten Netzwerkteilnehmer (12), der eine erste Steuerschaltung (36) aufweist, wobei die erste Steuerschaltung (36) dazu eingerichtet ist, erste Eingangsdaten zusammen mit einer Schreibaufforderung über einen ersten Port des ersten Netzwerkteilnehmers (12) an einen dritten Netzwerkeilnehmer (16) zu senden und erste Ausgangsdaten mittels einer Leseaufforderung von dem dritten Netzwerkeilnehmer (16) abzufragen;
einen zweiten Netzwerkteilnehmer (14), der eine zweite Steuerschaltung aufweist, wobei die zweite Steuerschaltung dazu eingerichtet ist, zweite Eingangsdaten zusammen mit einer Schreibaufforderung über einen zweiten Port des zweiten Netzwerkteilnehmers (14) an den dritten Netzwerkeilnehmer (16) zu senden und zweite Ausgangsdaten mittels einer Leseaufforderung von dem dritten Netzwerkeilnehmer (16) abzufragen; und
den dritten Netzwerkteilnehmer (16), der eine dritte Steuerschaltung (30) aufweist, wobei die dritte Steuerschaltung (30) dazu eingerichtet ist, auf Basis der ersten und zweiten Eingangsdaten unter Verwendung eines in der dritten Steuerschaltung (30) implementierten Steueralgorithmus die ersten und zweiten Ausgangsdaten zu bestimmen;
**dadurch gekennzeichnet, dass**
der dritte Netzwerkteilnehmer (16) als logischer Master und Modbus-Slave ausgebildet ist;
der erste Netzwerkteilnehmer (12) als Modbus-Master und logischer Slave ausgebildet ist; und
der zweite Netzwerkteilnehmer (14) als Modbus-Master und logischer Slave ausgebildet ist.

2. Modbus-Netzwerk (10) nach Anspruch 1, wobei
die erste Steuerschaltung (36) dazu eingerichtet ist, eine Kopie der ersten Eingangsdaten zusammen mit einer Schreibaufforderung über einen dritten Port des ersten Netzwerkteilnehmers (12) an den dritten Netzwerkeilnehmer (16) zu senden; und
die zweite Steuerschaltung dazu eingerichtet ist, eine Kopie der zweiten Eingangsdaten zusammen mit einer Schreibaufforderung über einen vierten Port des zweiten Netzwerkteilnehmers (14) an den dritten Netzwerkeilnehmer (16) zu senden.

3. Modbus-Netzwerk (10) nach Anspruch 2, wobei die dritte Steuerschaltung (30) dazu eingerichtet ist, die ersten Ausgangsdaten auf Basis der ersten Eingangsdaten zu bestimmen, wenn die ersten Eingangsdaten zuletzt empfangen wurden oder die ersten Ausgangsdaten auf Basis der Kopie der ersten Eingangsdaten zu bestimmen, wenn die Kopie der ersten Eingangsdaten zuletzt empfangen wurden.

4. Modbus-Netzwerk (10) nach einem der Ansprüche 1 bis 3, wobei die dritte Steuerschaltung (30) dazu eingerichtet ist, den Steueralgorithmus zyklisch auszuführen.

5. Modbus-Netzwerk (10) nach einem der Ansprüche 1 bis 4, ferner umfassend:
einen vierten Netzwerkteilnehmer (18), wobei
die erste Steuerschaltung (36) ferner dazu eingerichtet ist, die ersten Eingangsdaten zusammen mit einer Schreibaufforderung über den ersten Port des ersten Netzwerkteilnehmers (12) an den vierten Netzwerkeilnehmer (18) zu senden;
die zweite Steuerschaltung ferner dazu eingerichtet ist, die zweiten Eingangsdaten zusammen mit einer Schreibaufforderung über den zweiten Port des zweiten Netzwerkteilnehmers (14) an den vierten Netzwerkeilnehmer (18) zu senden; und
der vierte Netzwerkteilnehmer (18) eine vierte Steuerschaltung aufweist, wobei die vierte Steuerschaltung dazu eingerichtet ist, auf Basis der ersten und zweiten Eingangsdaten unter Verwendung eines in der vierten Steuerschaltung implementierten zweiten Steueralgorithmus dritte und vierte Ausgangsdaten zu bestimmen, wobei die dritten Ausgangsdaten zu den ersten Ausgangsdaten identisch sind und die vierten Ausgangsdaten zu den zweiten Ausgangsdaten identisch sind.

6. Modbus-Netzwerk (10) nach Anspruch 5, wobei der vierte Netzwerkteilnehmer (18) als Modbus-Slave und logischer Master ausgebildet ist, und eingerichtet ist, die Rolle des dritten Netzwerkteilnehmers (16) zu übernehmen, wenn der dritte Netzwerkteilnehmer (16) ausfällt.

7. Modbus-Netzwerk (10) nach Anspruch 5 oder 6, wobei der Steueralgorithmus und der zweite Steueralgorithmus identisch sind.

8. Modbus-Netzwerk (10) nach einem der Ansprüche 5 bis 7, wobei
die erste Steuerschaltung dazu eingerichtet ist, eine dritte Kopie der ersten Eingangsdaten zusammen mit einer Schreibaufforderung über den dritten Port des ersten Netzwerkteilnehmers (12) an den vierten Netzwerkeilnehmer (18) zu senden; und
die zweite Steuerschaltung dazu eingerichtet ist, eine dritte Kopie der zweiten Eingangsdaten zusammen mit einer Schreibaufforderung über den vierten Port des zweiten Netzwerkteilnehmers (14) an den vierten Netzwerkeilnehmer (18) zu senden.

9. Modbus-Netzwerk (10) nach einem der Ansprüche 5 bis 8, wobei
die erste Steuerschaltung (36) dazu eingerichtet ist, die dritten Ausgangsdaten mittels einer Leseaufforderung von dem vierten Netzwerkeilnehmer (18) abzufragen;
wobei die zweite Steuerschaltung dazu eingerichtet ist, die vierten Ausgangsdaten mittels einer Leseaufforderung von dem vierten Netzwerkeilnehmer (18) abzufragen.

10. Modbus-Netzwerk (10) nach Anspruch 9, wobei
die erste Steuerschaltung (36) dazu eingerichtet ist, entweder die von dem dritten Netzwerkteilnehmer (16) abgefragten ersten Ausgangsdaten oder die von dem vierten Netzwerkteilnehmer (18) abgefragten dritten Ausgangsdaten weiterzuleiten.

11. Modbus-Netzwerk (10) nach einem der Ansprüche 1 bis 10, wobei
der erste Netzwerkteilnehmer (12) einen an einem ersten Gehäuse des ersten Netzwerkteilnehmers (12) angeordneten ersten Schalter (38) aufweist und die erste Steuerschaltung (36) ferner dazu eingerichtet ist, eine in der Schreibaufforderung enthaltene Angabe hinsichtlich Registern des dritten Netzwerkteilnehmers (16), in die die ersten Eingangsdaten zu schreiben sind, auf Basis einer Stellung des ersten Schalters (38) zu bestimmen; und
der zweite Netzwerkteilnehmer (14) einen an einem zweiten Gehäuse des zweiten Netzwerkteilnehmers (14) angeordneten zweiten Schalter aufweist und die zweite Steuerschaltung ferner dazu eingerichtet ist, eine in der Schreibaufforderung enthaltene Angabe hinsichtlich Registern des dritten Netzwerkteilnehmers (16), in die die zweiten Eingangsdaten zu schreiben sind, auf Basis einer Stellung des zweiten Schalters zu bestimmen.

## Claims

1. Modbus network (10) comprising:
a first network subscriber (12) that has a first control circuit (36), wherein the first control circuit (36) is configured to send first input data together with a write request via a first port of the first network subscriber (12) to a third network subscriber (16) and to request first output data from the third network subscriber (16) by means of a read request;
a second network subscriber (14) that has a second control circuit, wherein the second control circuit is configured to send second input data together with a write request via a second port of the second network subscriber (14) to the third network subscriber (16) and to request second output data from the third network subscriber (16) by means of a read request; and
the third network subscriber (16), which has a third control circuit (30), wherein the third control circuit (30) is configured to take the first and second input data as a basis for using a control algorithm implemented in the third control circuit (30) to determine the first and second output data;
**characterized in that**
the third network subscriber (16) is in the form of a logical master and a Modbus a slave;
the first network subscriber (12) is in the form of a Modbus master and a logical slave; and
the second network subscriber (14) is in the form of a Modbus master and a logical slave.

2. Modbus network (10) according to Claim 1, wherein
the first control circuit (36) is configured to send a copy of the first input data together with a write request via a third port of the first network subscriber (12) to the third network subscriber (16) ; and
the second control circuit is configured to send a copy of the second input data together with a write request via a fourth port of the second network subscriber (14) to the third network subscriber (16) .

3. Modbus network (10) according to Claim 2, wherein
the third control circuit (30) is configured to determine the first output data on the basis of the first input data if the first input data have been received last or to determine the first output data on the basis of the copy of the first input data if the copy of the first input data has been received last.

4. Modbus network (10) according to one of Claims 1 to 3, wherein the third control circuit (30) is configured to perform the control algorithm cyclically.

5. Modbus network (10) according to one of Claims 1 to 4, further comprising:
a fourth network subscriber (18), wherein
the first control circuit (36) is further configured to send the first input data together with a write request via the first port of the first network subscriber (12) to the fourth network subscriber (18) ;
the second control circuit is further configured to send the second input data together with a write request via the second port of the second network subscriber (14) to the fourth network subscriber (18) ; and
the fourth network subscriber (18) has a fourth control circuit, wherein the fourth control circuit is configured to take the first and second input data as a basis for using a second control algorithm implemented in the fourth control circuit to determine third and fourth output data, wherein the third output data are identical to the first output data and the fourth output data are identical to the second output data.

6. Modbus network (10) according to Claim 5, wherein
the fourth network subscriber (18) is in the form of a Modbus slave and a logical master, and is configured to accept the role of the third network subscriber (16) if the third network subscriber (16) fails.

7. Modbus network (10) according to Claim 5 or 6, wherein the control algorithm and the second control algorithm are identical.

8. Modbus network (10) according to one of Claims 5 to 7, wherein
the first control circuit is configured to send a third copy of the first input data together with a write request via the third port of the first network subscriber (12) to the fourth network subscriber (18); and
the second control circuit is configured to send a third copy of the second input data together with a write request via the fourth port of the second network subscriber (14) to the fourth network subscriber (18).

9. Modbus network (10) according to one of Claims 5 to 8, wherein
the first control circuit (36) is configured to request the third output data from the fourth network subscriber (18) by means of a read request; wherein the second control circuit is configured to request the fourth output data from the fourth network subscriber (18) by means of a read request.

10. Modbus network (10) according to Claim 9, wherein
the first control circuit (36) is configured to forward either the first output data requested from the third network subscriber (16) or the third output data requested from the fourth network subscriber (18).

11. Modbus network (10) according to one of Claims 1 to 10, wherein
the first network subscriber (12) has a first switch (38) arranged on a first housing of the first network subscriber (12), and the first control circuit (36) is further configured to determine a statement regarding registers of the third network subscriber (16) that are meant to have the first input data written to them, which statement is contained in the write request, on the basis of a position of the first switch (38); and
the second network subscriber (14) has a second switch arranged on a second housing of the second network subscriber (14), and the second control circuit is further configured to determine a statement regarding registers of the third network subscriber (16) that are meant to have the second input data written to them, which statement is contained in the write request, on the basis of a position of the second switch.

## Revendications

1. Réseau Modbus (10), comprenant :
un premier utilisateur de réseau (12) comportant un premier circuit de commande (36), dans lequel le premier circuit de commande (36) est conçu pour envoyer des premières données d'entrée avec une requête d'écriture par l'intermédiaire d'un premier port du premier utilisateur de réseau (12) à un troisième utilisateur de réseau (16) et pour demander au troisième utilisateur de réseau (16) des premières données de sortie au moyen d'une requête de lecture ;
un deuxième utilisateur de réseau (14) comportant un deuxième circuit de commande, dans lequel le deuxième circuit de commande est conçu pour envoyer des deuxièmes données d'entrée avec une requête d'écriture par l'intermédiaire d'un deuxième port du deuxième utilisateur de réseau (14) au troisième utilisateur de réseau (16) et pour demander au troisième utilisateur de réseau (16) des deuxièmes données de sortie au moyen d'une requête de lecture ; et
le troisième utilisateur de réseau (16) comporte un troisième circuit de commande (30), dans lequel le troisième circuit de commande (30) est conçu pour déterminer les premières et deuxièmes données de sortie sur la base des premières et deuxièmes données d'entrée en utilisant un algorithme de commande mis en oeuvre dans le troisième circuit de commande (30) ;
**caractérisé en ce que**
le troisième utilisateur de réseau (16) est réalisé sous forme d'un maître logique et d'un esclave Modbus ;
le premier utilisateur de réseau (12) est réalisé sous forme de maître Modbus et d'esclave logique ; et
le deuxième utilisateur de réseau (14) est réalisé sous forme de maître Modbus et d'esclave logique.

2. Réseau Modbus (10) selon la revendication 1, dans lequel
le premier circuit de commande (36) est conçu pour envoyer une copie des premières données d'entrée avec une requête d'écriture au troisième utilisateur de réseau (16) par l'intermédiaire d'un troisième port du premier utilisateur de réseau (12) ; et
le deuxième circuit de commande est conçu pour envoyer une copie des deuxièmes données d'entrée avec une requête d'écriture au troisième utilisateur de réseau (16) par l'intermédiaire d'un quatrième port du deuxième utilisateur de réseau (14).

3. Réseau Modbus (10) selon la revendication 2, dans lequel le troisième circuit de commande (30) est conçu pour déterminer les premières données de sortie sur la base des premières données d'entrée lorsque les premières données d'entrée ont été reçues en dernier lieu ou pour déterminer les premières données de sortie sur la base des copies des premières données d'entrée lorsque les copies des premières données d'entrée ont été reçues en dernier lieu.

4. Réseau Modbus (10) selon l'une quelconque des revendications 1 à 3, dans lequel le troisième circuit de commande (30) est conçu pour exécuter l'algorithme de commande de manière cyclique.

5. Réseau Modbus (10) selon l'une quelconque des revendications 1 à 4 comprenant en outre :
un quatrième utilisateur de réseau (18), dans lequel le premier circuit de commande (36) est en outre conçu pour envoyer les premières données d'entrée avec une requête d'écriture par l'intermédiaire du premier port du premier utilisateur de réseau (12) au quatrième utilisateur de réseau (18) ;
le deuxième circuit de commande est en outre conçu pour envoyer les deuxièmes données d'entrée avec une requête d'écriture par l'intermédiaire du deuxième port du deuxième utilisateur de réseau (14) au quatrième utilisateur de réseau (18) ; et
le quatrième utilisateur de réseau (18) comporte un quatrième circuit de commande, dans lequel le quatrième circuit de commande est conçu pour déterminer des troisièmes et quatrièmes données de sortie sur la base des premières et deuxièmes données d'entrée en utilisant un deuxième algorithme de commande mis en oeuvre dans le quatrième circuit de commande, dans lequel les troisièmes données de sortie sont identiques aux premières données de sortie et les quatrièmes données de sortie sont identiques aux deuxièmes données de sortie.

6. Réseau Modbus (10) selon la revendication 5, dans lequel le quatrième utilisateur de réseau (18) est réalisé sous forme d'esclave Modbus et de maître logique, et est conçu pour jouer le rôle du troisième utilisateur de réseau (16) lorsque le troisième utilisateur de réseau (16) est défectueux.

7. Réseau Modbus (10) selon la revendication 5 ou 6, dans lequel l'algorithme de commande et le deuxième algorithme de commande sont identiques.

8. Réseau Modbus (10) selon l'une quelconque des revendications 5 à 7, dans lequel
le premier circuit de commande est conçu pour envoyer une troisième copie des premières données d'entrée avec une requête d'écriture par l'intermédiaire du troisième port du premier utilisateur de réseau (12) au quatrième utilisateur de réseau (18) ; et
le deuxième circuit de commande est conçu pour envoyer une troisième copie des deuxièmes données d'entrée avec une requête d'écriture par l'intermédiaire du quatrième port du deuxième utilisateur de réseau (14) au quatrième utilisateur de réseau (18).

9. Réseau Modbus (10) selon l'une quelconque des revendications 5 à 8, dans lequel
le premier circuit de commande (36) est conçu pour demander au quatrième utilisateur de réseau (18) les troisièmes données de sortie au moyen d'une requête de lecture ;
dans lequel le deuxième circuit de commande est conçu pour demander au quatrième utilisateur de réseau (18) les quatrièmes données de sortie au moyen d'une requête de lecture.

10. Réseau Modbus (10) selon la revendication 9, dans lequel
le premier circuit de commande (36) est conçu pour transmettre soit les premières données de sortie qui sont demandées par le troisième utilisateur de réseau (16), soit les troisièmes données de sortie qui sont demandées par le quatrième utilisateur de réseau (18).

11. Réseau Modbus (10) selon l'une quelconque des revendications 1 à 10, dans lequel
le premier utilisateur de réseau (12) comporte un premier commutateur (38) disposé sur un premier boîtier du premier utilisateur de réseau (12) et le premier circuit de commande (36) est en outre conçu pour déterminer, sur la base d'une position du premier commutateur (38), une indication contenue dans la requête d'écriture, de registres du troisième utilisateur de réseau (16) dans lesquels doivent être écrites les premières données d'entrée ; et
le deuxième utilisateur de réseau (14) comprend un deuxième commutateur disposé sur un deuxième boîtier du deuxième utilisateur de réseau (14) et le deuxième circuit de commande est en outre conçu pour déterminer, sur la base d'une position du deuxième commutateur, une indication contenue dans la requête d'écriture, de registres du troisième utilisateur de réseau (16) dans lesquels doivent être écrites les deuxièmes données d'entrée.
